(19) **Europäisches Patentamt**

**European Patent Office**

**Office européen des brevets**

(11) **EP 0 484 697 B1**

(12) **EUROPÄISCHE PATENTSCHRIFT**

(45) Veröffentlichungstag und Bekanntmachung des Hinweises auf die Patenterteilung:
**21.02.1996 Patentblatt 1996/08**

(51) Int. Cl.⁶: **B60G 17/015**, F16F 9/19

(21) Anmeldenummer: **91117528.9**

(22) Anmeldetag: **15.10.1991**

(54) **Verfahren zum semiaktiven Regeln eines Fahrwerks**

Semi-active control method for a suspension

Méthode de commande semi-active d'une suspension

(84) Benannte Vertragsstaaten:
**DE FR GB IT SE**

(30) Priorität: **07.11.1990 DE 4035314**

(43) Veröffentlichungstag der Anmeldung:
**13.05.1992 Patentblatt 1992/20**

(73) Patentinhaber: **ROBERT BOSCH GMBH**
**D-70442 Stuttgart (DE)**

(72) Erfinder:
• **Wanner, Michael, Dipl.-Ing.**
**W-7031 Holzgerlingen (DE)**
• **Kallenbach, Rainer, Dr.-Ing.**
**W-7000 Stuttgart 1 (DE)**

(56) Entgegenhaltungen:
**US-A- 4 696 489**

**Beschreibung**

Stand der Technik

Die Erfindung betrifft ein Verfahren zum semiaktiven Regeln eines Fahrwerks, insbesondere zur Dämpfung federnder Radaufhängungssysteme bei Fahrzeugen entsprechend dem Oberbegriff von Anspruch 1 (DE-A-3524863).

Von einem schwingungstechnischen Stand aus betrachtet wirken zwei wesentliche Störquellen auf ein Fahrzeug ein. Zum einen sind dies Fahrbahnunebenheiten, welche vertikale Radbewegungen sowie Hub-, Nick- und Wankschwingungen des Fahrzeugaufbaus hervorrufen, zum anderen werden auch durch Fahrereingriffe, wie Lenken, Beschleunigen und Bremsen, unerwünschte Fahrzeugbewegungen hervorgerufen. Die Gesamtheit der so angeregten Schwingungen beeinflußt maßgeblich Fahrkomfort und Fahrsicherheit.

Um die Aufbaubewegung eines Fahrzeuges optimal zu bedämpfen, wäre ein inertial geführter Dämpfer, welcher zwischen einer fiktiven, parallel oberhalb der Fahrbahn laufenden Schiene und dem Aufbau eingebaut ist, das ideale Bauelement.

Ein derartiger sogenannter "Skyhook-Dämpfer", wie er beispielsweise in "Optimierung des Fahrzeugverhaltens mit semiaktiver Fahrwerkregelung", VDI-Berichte Nr. 699, 1988, Seite 121 ff. beschrieben ist, ist jedoch technisch nicht realisierbar. Eine näherungsweise, technisch realisierbare Lösung ist jedoch die Ansteuerung eines Dämpfers, welcher zwischen Rad und Aufbau eingebaut ist, in Abhängigkeit der absoluten Vertikalgeschwindigkeit des Aufbaus. Dies kann durch Rückführung des Geschwindigkeitssignals an jeder Radeinheit individuell am jeweiligen Dämpfer oder aber aufgrund der Gesamtbewegung des Aufbaus erfolgen, welche sich aus Hub-, Nick- und Wankbewegungen zusammensetzt. Die Regelung erfolgt dann nach entsprechenden Algorithmen und regelt Stellventile an den einzelnen Dämpfern direkt.

Einen weiteren Problemkreis bildet die Frage, in welche Richtung eine Dämpfungskraft wirken soll, d.h. ob bei ausfahrender Kolbenstange, der sogenannten Zugstufe, oder bei einfahrender Kolbenstange, der sogenannten Druckstufe, eine Dämpfungskraft variiert werden soll. Die Richtung der Dämpfungskraft (Zug oder Druck) kann, wie es sich versteht, nicht willkürlich gesteuert werden, sondern hängt von der momentanen Richtung der Relativgeschwindigkeit zwischen Aufbau und Rad bzw. Radaufhängung ab und wirkt dieser grundsätzlich entgegen. Es gibt einige Veröffentlichungen, in denen Zug- und Druckstufe eines Dämpfers getrennt angesteuert werden und voneinander hydraulisch mittels Rückschlagventilen entkoppelt sind. Zu nennen sind hier die DE-OS 35 24 863, DE-OS 35 24 862, DE-OS 36 11 315, DE-OS 37 61 506 und DE-OS 36 10 937. In diesen Systemen ist aber erkennbar, daß mit mindestens zwei hydraulisch durch Rückschlagventile voneinander entkoppelten Ventilen gearbeitet wird, was in Aufwand und Steuerung erhebliche Nachteile mit sich bringt.

Vorteile der Erfindung

Das vorliegende erfindungsgemäße Verfahren gemäß dem kennzeichnenden Teil von Anspruch 1 hat den wesentlichen Vorteil, daß mittels nur eines schnell verstellbaren Ventils eine hydraulische Entkoppelung von Zug- und Druckstufe erreicht werden kann. Dieses eine Ventil erlaubt dann auch die Integration der Ventilanordnung in den Dämpfer selbst, wodurch sich der Platzbedarf für die Ventilanordnung erheblich reduziert und einbaufreundlichere Komponenten erhalten werden können.

Je nach Bewegungsrichtung des Fahrzeugaufbaus muß für dessen optimale Dämpfung entweder die Zug- oder die Druckstufe des Dämpfers weich oder hart eingestellt werden. Dieses Ändern der Ventilstellung findet erfindungsgemäß im Nulldurchgang der Relativgeschwindigkeit der Relativbewegung zwischen Rad und Aufbau bzw. zu dem Zeitpunkt statt, an dem die Dämpferkraft gleich Null ist. Ebenso kann als Parameter hierfür der Differenzdruck am Dämpferkolben genommen werden, welcher zwischen oberer und unterer Arbeitskammer herrscht. Die Verstellfrequenz liegt im Bereich von mindestens der doppelten Radeigenfrequenz. Durch entsprechende Beeinflussung der Strömung des Druckmittels aus und in die jeweiligen Arbeitskammern am Dämpfer kann die Kraft, welche der Bewegung des Aufbaus entgegenwirkt, verstärkt und die Kraft, welche in Richtung der Bewegung des Aufbaus wirkt, reduziert werden. Gleichzeitig muß auch eine Mindestdämpfung (Grunddämpfung) am Ventil garantiert sein. Bei Erkennen von sehr starken Radbewegungen muß die erforderliche Dämpferkraft zur optimalen Radbedämpfung eingestellt werden können.

Für das erfindungsgemäße Verfahren sind außer schnell schaltenden Ventilen auch Sensoren erforderlich, die entweder den Nulldurchgang der Relativgeschwindigkeit von Aufbau und Rad bzw. den Nulldurchgang der Dämpferkraft oder aber den Nulldurchgang des Differenzdruckes am Dämpferkolben ermitteln. Ein entsprechender Regelalgorithmus verarbeitet eines der genannten Signale zusammen mit dem jeweiligen Signal der Vertikalgeschwindigkeit des Aufbaus und steuert über eine Leistungsendstufe eines Steuergerätes die Ventile in geeigneter Weise an.

Die für die Ventilschaltfunktion erforderlichen Sensoren können im übrigen gleichzeitig auch für weitere Funktionen genutzt werden. So läßt sich die Relativgeschwindigkeit durch Differenzierung des Relativwegsignales errechnen, wobei das Relativwegsignal gleichzeitig für Niveauregelsysteme oder aber für die Erkennung von Beladungsänderungen und damit verbundenen Anpassungen der Bremskraftverteilung etc. verwendet werden kann.

Für die Realisierung des vorliegenden semiaktiven Dämpferregelungungskonzeptes können die entsprechenden Ventile verschiedene Ausführungsformen aufweisen. Neben schnell schaltenden Ventilen, welche als Drosselventile mit zwei oder mehreren Ventilöffnungsquerschnitten für unterschiedliche Druckmittelströme oder als Druckbegrenzungsventil mit zwei oder mehreren Druckstufen in vor- oder direktgesteuerter Bauform vorliegen, sind auch kontinuierlich verstellbare Drosselventile oder Druckbegrenzungsventile mit hoher Stelldynamik einsetzbar. In jedem Fall werden die Ventile in Zug- und Druckstufe durchströmt, wobei sie in der Lage sein müssen, für jeden Übergang zwischen dieser Stufe ihre Charakteristik zu variieren. Hier liegt ein wesentlicher Unterschied zu den in bekannten Regelsystemen eingesetzten Ventilen, da diese lediglich als Rückschlagventile ausgebildet sind.

Bei der Verwendung von kontinuierlich verstellbaren Ventilen kann auch angestrebt werden, daß die oben genannten Sensoren nicht nur die Nulldurchgänge direkt erfassen, sondern vielmehr momentane Sensorwerte liefern. Aufgrund extrem kurzer Zykluszeiten des Regelalgorithmus erfolgt zu jedem Zeitpunkt eine definierte Ansteuerung des kontinuierlich verstellbaren Ventils, wobei eine optimale Ausnutzung des Eingriffspotentiales dieses Ventils ermöglicht wird.

Insbesondere die Verwendung von kontinuierlich verstellbaren Ventilen erlaubt eine optimale Radbedämpfung im Gegensatz zu einer starken Radbedämpfung bei Schaltventilen, wobei sich die optimale Radbedämpfung auf die Minimierung von dynamischen Radlastschwankungen bezieht.

Die für die Realisierung des erfindungsgemäßen Verfahrens erforderliche Regelstrategie basiert auf einem geschlossenen Regelkreis, welcher bei Verwendung von Schaltventilen in geeigneter Weise um eine Schwellwerterkennung oder Gate-Funktion erweitert wird, wobei die Aufbereitung der elektrischen Sensorsignale, die Umsetzung der Regelstrategie und die Ansteuerung der Ventile in einem elektrischen Steuergerät realisiert werden.

Zeichnung

Die Erfindung wird anhand der nachfolgenden Zeichnung näher erläutert; diese zeigt in

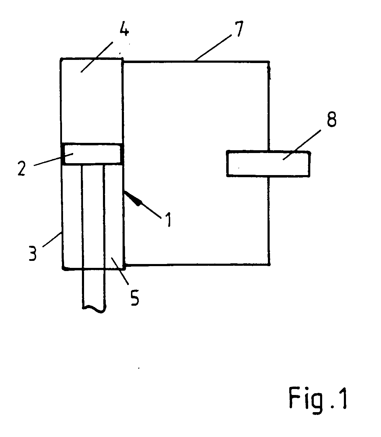

Figur 1        ein Grundschema eines Teils einer erfindungsgemäßen Fahrwerkregelung;

Figur 2        ein Diagramm für die Schaltung eines Ventils sowie entsprechende Schaltzeitpunkte.

Beschreibung

Die vorliegende erfindungsgemäße semiaktive Fahrwerkregelung betrifft vor allem die Steuerung von Stoßdämpfern 1, welche zwischen einem nicht näher gezeigten Aufbau und einer ebenfalls nicht näher gezeigten Achse bzw. Aufhängung eines Rades angeordnet sind.

Der Stoßdämpfer 1 besteht aus einem Zylinder 3, in welchem ein Dämpferkolben 2 eine obere Arbeitskammer 4 von einer unteren Arbeitskammer 5 abteilt. Aus einer der Arbeitskammern 4,5 führt eine Kolbenstange 6, welche mit dem Dämpferkolben 2 in Verbindung steht.

Obere Arbeitskammer 4 und untere Arbeitskammer 5 sind über eine Druckmittelleitung 7 miteinander verbunden, in welche ein Ventil 8 eingeschaltet ist. Dieses Ventil 8 kann beispielsweise ein schnell schaltendes Zwei- oder Mehrstellungsdrosselventil, ein Druckbegrenzungsventil in vor- oder direktgesteuerter Bauart oder auch ein kontinuierlich verstellbares Drosselventil oder Druckbegrenzungsventil sein. Allein wesentlich ist, daß das Ventil bezüglich der Strömung des Druckmittels in der Leitung 7 eine Verringerung oder Erhöhung des Differenzdruckes am Ventil ermöglichen kann, gleichgültig in welcher Richtung zwischen den beiden Arbeitskammern 4 und 5 das Druckmittel strömt. Entsprechende Schaltungen des Ventils können als hart oder weich bezeichnet werden. Die Druckmittelleitung 7 kann auch im Dämpferkolben 2 in Serie mit dem Ventilelement 8 integriert werden.

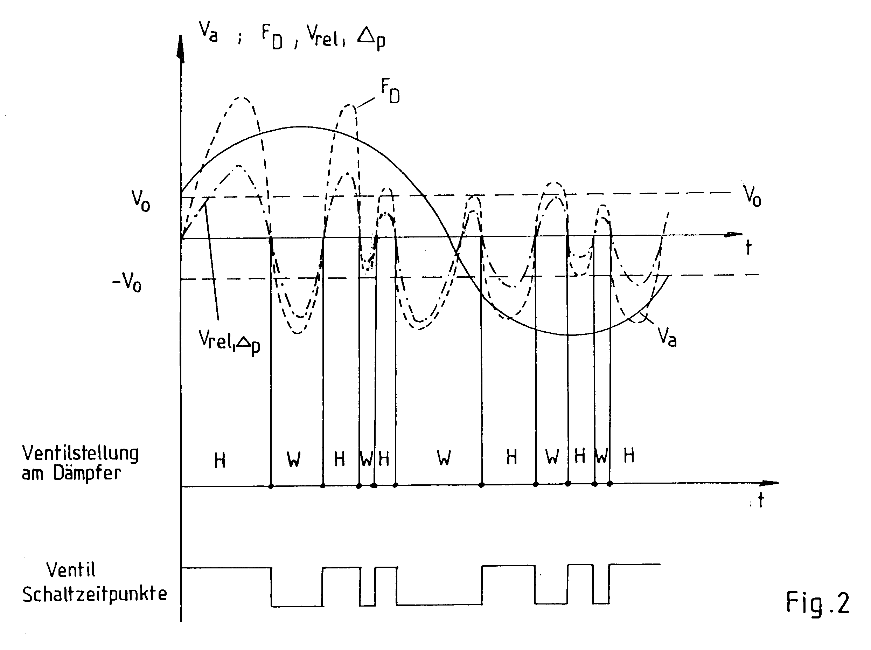

Für die Schaltung des Ventils ist erfindungsgemäß die Relativgeschwindigkeit der Relativbewegung zwischen Achse bzw. Rad und Aufbau, die Dämpferkraft und/oder der Differenzdruck am Dämpferkolben maßgebend. Zur näheren Erläuterung dieser Parameter bzw. deren Beziehung wird auf die VDI-Berichte Nr. 699, 1988, Seite 121 ff. "Optimierung des Fahrwerkverhaltens mit semiaktiver Fahrwerkregelung" und auf die DE-OS 35 24 862 verwiesen. Figur 2 beschreibt die Vorgänge bei Verwendung eines zweistufigen diskret schaltenden Ventils, trifft jedoch prinzipiell auch bei kontinuierlichen Systemen zu. Im einzelnen wird verstanden unter

$V_a$ die Geschwindigkeit des Kraftfahrzeugaufbaus

$v$ die Radgeschwindigkeit

$v_0$ Schwellwert der Aufbaugeschwindigkeit, ab welchem Aufbauregelung aktiviert wird

$V_{rel} = v - V_a$ = Differenzgeschwindigkeit zwischen Rad und Aufbau

$F_D$ Dämpfungskraft

$\Delta p$ Differenzdruck am Dämpferkolben.

Werden Dämpfungskraft $F_D$, Differenzgeschwindigkeit $V_{rel}$ zwischen Rad und Aufbau und Differenzdruck $\Delta p$ auf einer Zeitachse aufgetragen, so ergibt sich eine sinuskurvenförmige Bewegung, wobei in Figur 2 die Absolutgeschwindigkeit des Aufbaus durchgezogen, die Dämpferkraft $F_D$ gestrichelt und die Differenzgeschwindigkeit $V_{rel}$ zwischen Rad und Aufbau strichpunktiert dargestellt ist. Die Kurve für die Differenzgeschwindigkeit $V_{rel}$ entspricht der Kurve für den Differenzdruck $\Delta p$ am Dämpferkolben.

Bei der Darstellung der Schaltzeitpunkte ist erkennbar, daß das Ventil jeweils bei einem Nulldurchgang der Differenzgeschwindigkeit $V_{rel}$ bzw. des Differenzdruckes $\Delta p$ bzw. der Dämpferkraft $F_D$ umschaltet und zwar jeweils von einer harten in eine weiche Schaltstellung. Die entsprechenden Schaltgesetze sind für die Aufbaubedämpfung wie folgt:

| | Zug | Druck |
|---|---|---|
| $V_a > V_0$; $V_{rel} > 0$ oder $\Delta p > 0$ | H | (H) |
| $V_a > V_0$; $V_{rel} < 0$ oder $\Delta p < 0$ | (W) | W |
| $-V_0 < V_a < V_0$ | W | W |
| $V_a < -V_0$; $V_{rel} > o$ oder $\Delta p > 0$ | W | (W) |
| $V_a < -V_0$; $V_{rel} < 0$ oder $\Delta p < 0$ | (H) | H |

Hart und Weich (H,W) treffen in dieser Form nur bei Verwendung von Schaltventilen zu. Kontinuierlich arbeitende Ventile lassen eine Nuancierung der Härte bzw. Weichheit in Abhängigkeit verschiedener Parameter zu. Bei Berücksichtigung einer optimalen Radbedämpfung gleichzeitig zur Aufbauberuhigung werden dem oben angeführten Schaltgesetz weitere Kriterien zur optimalen Dämpferkrafteinstellung an Aufbau und Rad überlagert. Der Schwellwert der Aufbaugeschwindigkeit $V_0$ soll verhindern, daß unnötige Dämpferkraftvariationen im hochfrequenten Bereich erfolgen.

**Patentansprüche**

1. Verfahren zum semiaktiven Regeln eines Fahrwerkes, insbesondere zur Dämpfung federnder Radaufhängungssysteme bei Fahrzeugen, mit einem in einem Zylinder verschiebbaren und diesen in zwei Arbeitskammern unterteilenden Kolben, wobei Zylinder und Kolben jeweils mit einem Fahrzeugaufbau bzw. einer Radachse verbunden sind und den Arbeitskammern zumindest ein Ventil zugeordnet wird, welches den Fluß von Druckmittel in und aus dem Arbeitskammern teuert, dadurch gekennzeichnet, daß die Steuerung des Ventils in Abhängigkeit einer absoluten Vertikalgeschwindigkeit ($V_a$) des Aufbaus und eines Nulldurchganges der Relativgeschwindigkeit ($V_{rel}$) der Relativbewegung zwischen Achse bzw. Rad und Aufbau und/oder eines Nulldurchganges des Differenzdruckes ($\Delta p$) am Dämpferkolben erfolgt.

2. Verfahren nach Anspruch 1, dadurch gekennzeichnet, daß über das Ventil die Dämpferkraft ($F_D$), welche bei einer Relativbewegung zwischen Rad und Aufbau der Aufbaubewegung entgegenwirkt, verstärkt und entsprechend die Dämpferkraft ($F_D$), welche die Aufbaubewegung verstärkt, reduziert wird.

3. Verfahren nach Anspruch 2, dadurch gekennzeichnet, daß eine passive Grunddämpfung für die Bewegung des Rades aufrecht erhalten wird.

4. Verfahren nach Anspruch 2, dadurch gekennzeichnet, daß eine maximal mögliche Dämpfung der Bewegung des Rades über eine nicht beeinflußbare, von der Relativgeschwindigkeit zwischen Rad und Aufbau abhängige passive Dämpferkraft und/oder eine superpositive, speziell im hochfrequenten Bewegungsbereich des Rades aktivierte Dämpfung aufrecht erhalten wird.

5. Verfahren nach wenigstens einem der Ansprüche 1 bis 4, dadurch gekennzeichnet, daß der Nulldurchgang der Relativgeschwindigkeit ($V_{rel}$) der Relativbewegung zwischen Rad und Aufbau und/oder der Nulldurchgang der Dämpferkraft ($F_D$) und/oder der Nulldurchgang des Differenzdruckes ($\Delta p$) am Dämpferkolben sensiert wird.

6. Verfahren nach wenigstens einem der Ansprüche 1 bis 4, dadurch gekennzeichnet, daß die Relativgeschwindigkeit ($V_{rel}$) der Relativbewegung zwischen Rad und Aufbau und/oder die Dämpferkraft ($F_D$) und/oder der Differenzdruck ($\Delta p$) am Dämpferkolben laufend ermittelt wird.

**7.** Verfahren nach wenigstens einem der Ansprüche 1 bis 6, dadurch gekennzeichnet, daß das Ventil bezüglich der Strömung eines Druckmittels zwischen den beiden Arbeitskammern eine Verringerung oder Erhöhung des Differenzdruckes am Ventil unabhängig von der Strömungsrichtung ermöglicht.

**8.** Verfahren nach wenigstens einem der Ansprüche 1 bis 6, dadurch gekennzeichnet, daß als Ventil ein kontinuierlich verstellbares Ventil oder ein diskret in Stufen verstellbares Ventil verwendet wird, welches vorzugsweise im Dämpferkolben integriert sein soll.

**9.** Verfahren nach Anspruch 8, dadurch gekennzeichnet, daß als Ventil ein schnell verstellbares Zwei- oder Mehrstellungsdrosselventil, ein Druckbegrenzungsventil in vor- oder direktgesteuerter Bauart oder ein kontinuierlich verstellbares Drossel- oder Druckbegrenzungsventil verwendet wird.

**Claims**

**1.** Method for the semi-active control of a chassis, in particular for damping spring-mounted wheel suspension systems in vehicles, having a piston which is displaceable in a cylinder and divides the latter into two working chambers, the cylinder and the piston each being connected to a vehicle body or a wheel axle, and at least one valve being assigned to the working chambers, which valve controls the flow of pressure medium into and out of the operating chambers, characterized in that the control of the valve takes place as a function of an absolute vertical velocity ($V_a$) of the body and of a zero passage of the relative velocity ($V_{rel}$) of the relative movement between the axle or wheel and the body and/or of a zero passage of the differential pressure ($\Delta p$) at the damper piston.

**2.** Method according to Claim 1, characterized in that the damper force ($F_D$) which counteracts the body movement during a relative movement between the wheel and the body is reinforced by means of the valve and the damper force ($F_D$) which reinforces the body movement is reduced accordingly.

**3.** Method according to Claim 2, characterized in that a passive basic damping is maintained for the movement of the wheel.

**4.** Method according to Claim 2, characterized in that a maximum possible damping of the movement of the wheel is maintained by means of a passive damper force which cannot be influenced and depends on the relative velocity between the wheel and the body and/or by means of a superpositive damping which is specifically activated in the high-frequency movement range of the wheel.

**5.** Method according to at least one of Claims 1 to 4, characterized in that the zero passage of the relative velocity ($V_{rel}$) of the relative movement between the wheel and the body and/or the zero passage of the damper force ($F_D$) and/or the zero passage of the differential pressure ($\Delta p$) at the damper piston is sensed.

**6.** Method according to at least one of Claims 1 to 4, characterized in that the relative velocity ($V_{rel}$) of the relative movement between the wheel and the body and/or the damper force ($F_D$) and/or the differential pressure ($\Delta p$) at the damper piston is continuously determined.

**7.** Method according to at least one of Claims 1 to 6, characterized in that the valve allows a reduction or increase in the differential pressure at the valve in relation to the flow of a pressure medium between the two working chambers irrespective of the flow direction.

**8.** Method according to at least one of Claims 1 to 6, characterized in that the valve used is a continuously adjustable valve or a valve which is discretely adjustable in stages and is preferably intended to be integrated in the damper piston.

**9.** Method according to Claim 8, characterized in that the valve used is a rapidly adjustable dual-position or multiple-position throttle valve, a pressure relief valve of a pilot control or direct control design or a continuously adjustable throttle valve or pressure relief valve.

**Revendications**

**1.** Procédé de régulation semi-active d'un châssis, notamment pour amortir des systèmes de suspension élastiques de roues de véhicules, à l'aide d'un piston coulissant dans un cylindre et subdivisant celui-ci en deux chambres actives, le cylindre et le piston étant reliés respectivement à la carrosserie et à un essieu et une soupape étant associée aux chambres actives pour commander le passage du fluide sous pression sortant ou arrivant dans les chambres actives, caractérisé en ce que la commande de la soupape se fait en fonction d'une vitesse verticale absolue ($V_a$) de la carrosserie et d'un passage par zéro de la vitesse relative ($V_{rel}$) du mouvement relatif entre l'essieu ou la roue et la carrosserie et/ou un passage par zéro de la différence de pression ($\Delta P$) sur le piston d'amortisseur.

2. Procédé selon la revendication 1, caractérisé en ce que la soupape amplifie la force d'amortissement ($F_D$) s'opposant au mouvement de la carrosserie pour un mouvement relatif entre la roue et la carrosserie et réduit la force d'amortissement ($F_D$) qui accentue le mouvement de la carrosserie.

3. Procédé selon la revendication 2, caractérisé en ce que pour le mouvement de la roue on maintient un amortissement de base, passif.

4. Procédé selon la revendication 2, caractérisé en ce qu'on maintient un amortissement maximum possible du mouvement de la roue par une force d'amortissement passive, non influençable, qui dépend de la vitesse relative entre la roue et la carrosserie et/ou activée dans la plage de mouvement superpositif en particulier dans le domaine des hautes fréquences de la roue.

5. Procédé selon au moins l'une des revendications 1 à 4, caractérisé en ce qu'on détecte le passage par zéro de la vitesse relative ($V_{rel}$) du mouvement relatif entre la roue et la carrosserie et/ou le passage par zéro de la force d'amortissement ($F_D$) et/ou du passage par zéro de la différence de pression ($\Delta P$) sur le piston d'amortisseur.

6. Procédé selon au moins l'une des revendications 1 à 4, caractérisé en ce qu'on détermine en continu la vitesse relative ($V_{rel}$) du mouvement relatif entre la roue et la carrosserie et/ou la force d'amortisseur ($F_D$) et/ou la différence de pression ($\Delta P$) au niveau du piston d'amortisseur.

7. Procédé selon au moins l'une des revendications 1 à 6, caractérisé en ce que la soupape permet, pour le passage d'un fluide de pression entre les deux chambres actives, une réduction ou une augmentation de la différence de pression au niveau de la soupape, indépendamment du sens de passage du fluide.

8. Procédé selon au moins l'une des revendications 1 à 6, caractérisé en ce que la soupape est une soupape réglable en continu ou une soupape réglable par échelon, intégrée de préférence dans le piston d'amortisseur.

9. Procédé selon la revendication 8, caractérisé en ce que la soupape est une soupape d'étranglement à deux ou plusieurs positions, à réglage rapide, une soupape de limitation de pression à construction à commande directe ou commande préalable ou une soupape d'étranglement ou de limitation de pression, réglable en continu.

Fig.1

Fig. 2